# EUROPEAN PATENT SPECIFICATION

(11) **EP 1 769 850 B1**
(45) Date of publication and mention of the grant of the patent: **31.03.2010**
(21) Application number: 06394019.1
(22) Date of filing: 27.09.2006
(51) Int. Cl.: B02C 19/00, B02C 13/16, B02C 13/286

(54) **Glass bottle breaking apparatus**
Zerkleinerungsvorrichtung für Glasflaschen
Appareil de casse de bouteille en verre

(30) Priority: 28.09.2005 IE 20050648
(43) Date of publication of application: 04.04.2007
(73) Proprietor: Griffith, Thomas, Castlebar, Mayo (IE)
(72) Inventor: Griffith, Thomas, Castlebar, Mayo (IE)

(56) References cited:
- EP-A- 0 534 722
- DE-A1- 1 941 599
- DE-A1- 2 338 398
- GB-A- 2 131 722
- US-A- 3 936 004
- US-A- 5 076 505

## Description

The present invention relates to glass bottle breaking apparatus.

Recycling of glass bottles is environmentally desirable. Bottle banks are commonly located in areas of population for facilitating the collection of glass bottles. The bottle banks comprise one or more containers into which glass bottles are deposited for subsequent collection and delivery to a central recycling plant. While such bottle banks are adequate for domestic use, where the volume of bottles collected by householders is relatively small, they are unsuitable for commercial use, for example, for use by hotels, restaurants, bars and the like where the volume of bottles to be disposed of is relatively large. Accordingly, in general, hotels, restaurants and bars and other establishments where large volumes of glass bottles are to be disposed of require the services of a bottle collection service provider, which in turn requires a large container to be placed in a yard or other suitable location of the premises of the hotel, restaurant or bar, and the container, depending on the volume of bottles to be disposed of, is collected and an empty replacement is left in its place weekly, fortnightly, and in the case of large volume usage, bi-weekly. Because of the volume required to store glass bottles, such containers, in order to accommodate the volume of glass bottles to be disposed of between collection times, must be relatively large. This presents problems for many premises where space is at a premium, and in many cases, such premises may only be able to accommodate relatively small containers, thus increasing the collection frequency. This is costly, and thus undesirable.

U.S. Patent Specification No. 5,076,505 of Petrocy discloses apparatus for crushing glass bottles. The apparatus of Petrocy comprises a chamber within which a rotor which is provided by a rotating battering ram rotates. A downwardly extending chute delivers bottles to be broken axially into the chamber, and the bottles on being engaged by the rotating battering ram are broken. The broken pieces are delivered through an outlet at the bottom of the chamber into a bucket located beneath the chamber.

German Patent Specification No. 2,338,398 of Schlehan discloses apparatus for breaking bottles which comprises a chamber within which a rotor is rotatably mounted. Bottles are fed axially downwardly into the chamber, and on being engaged by the rotating rotor are broken into pieces. Broken pieces of the bottles are discharged through an outlet at the bottom of the chamber into a container.

There is therefore a need for apparatus for breaking glass bottles, in order to reduce the volume taken up by the glass bottles.

The present invention is directed towards providing a glass bottle breaking apparatus.

According to the invention there is provided glass bottle breaking apparatus comprising a main chamber, a rotor rotatably mounted in the main chamber about a main rotational axis and having at least one bottle engaging member extending therefrom for engaging and breaking a bottle in the main chamber as the rotor rotates, a drive means for rotating the rotor, an inlet to the main chamber for accommodating bottles into the main chamber, an outlet from the main chamber for accommodating broken glass therefrom, and an inlet chute for delivering bottles to the main chamber through the inlet thereto, the inlet chute extending from an upstream end to a downstream end adjacent the inlet to the main chamber, wherein a downstream portion of the inlet chute adjacent the downstream end thereof extends from the inlet to the main chamber in a general direction substantially radially relative to the main rotational axis and terminates in an upstream portion of the inlet chute remote from the main chamber, the upstream portion extends from the downstream portion in a general direction opposite to the tangential direction of motion of each bottle engaging member adjacent the inlet to the main chamber, and is inclined downwardly to the downstream portion.

Preferably, each bottle engaging member extends in a general radial direction from the rotor, and advantageously, each bottle engaging member is an elongated member. Ideally, each bottle engaging member is of metal, and preferably, of steel, and ideally, each bottle engaging member is of hardened steel.

In one embodiment of the invention each bottle engaging member is secured to the rotor by a securing means, the securing means being adapted to yield on pressure on the bottle engaging member exceeding a predetermined pressure for facilitating movement of the bottle engaging member relative to the rotor for avoiding overloading of the rotor and/or the drive means. Preferably, the securing means for securing each bottle engaging member to the rotor defines a pivot axis about which the corresponding bottle engaging member is pivotal relative to the rotor, the pivot axis defined by each securing means being spaced apart from and extending substantially parallel to the main rotational axis. Advantageously, each securing means comprises a securing pin, the securing pin defining the corresponding pivot axis.

In another embodiment of the invention the rotor comprises a pair of spaced apart clamping plates for clamping a proximal end of each bottle engaging member therebetween, and ideally, each securing means co-operates with the clamping plates and the corresponding bottle engaging member for securing the corresponding bottle engaging member to the clamping plates with the proximal end thereof clamped between the clamping plates.

In a further embodiment of the invention the predetermined pressure at which each securing means yields is determined by the clamping pressure exerted between the clamping plates on the proximal end of each bottle engaging member.

In one embodiment of the invention two bottle engaging members extend from the rotor on respective opposite sides thereof.

In another embodiment of the invention the downstream portion of the inlet chute inclines downwardly towards the inlet to the main chamber.

Preferably, the downstream portion of the inlet chute is offset downwardly from the upstream portion thereof to form a downward step from the upstream portion to the downstream portion.

Preferably, the upstream portion of the inlet chute extends from the downstream portion thereof at an angle of approximately 90°.

Preferably, the inlet chute comprises an inlet duct, the inlet duct comprising an upstream duct forming the upstream portion of the inlet chute, and a downstream duct forming the downstream portion of the inlet chute. Advantageously, the upstream duct terminates in an open mouth remote from the downstream duct for accommodating bottles into the inlet duct.

In one embodiment of the invention an upstream flexible curtain depends downwardly into the inlet duct for avoiding glass being propelled therethrough by each bottle engaging member. Preferably, the upstream flexible curtain is located intermediate the open mouth and the downstream duct.

In another embodiment of the invention a downstream flexible curtain depends downwardly into the downstream duct for avoiding glass being propelled through the downstream duct by each bottle engaging member. Preferably, the downstream curtain is located intermediate the inlet to the main chamber and the upstream duct.

Preferably, the outlet from the main chamber extends axially therefrom. Advantageously, the outlet from the main chamber extends downwardly from the main chamber. Ideally, the outlet from the main chamber is located substantially coaxially with the main rotational axis.

In one embodiment of the invention the rotor is rigidly mounted on a drive shaft rotatably mounted in the main chamber, and the drive means comprises a drive motor. Preferably, the drive motor drives the drive shaft through a transmission means. Advantageously, the drive motor is an electrically powered motor.

In one embodiment of the invention the rotor is rotated by the drive means at a speed in the range of 700 revolutions per minute (RPM) to 1,400 RPM. Preferably, the rotor is rotated by the drive means at a speed of approximately 750 RPM.

In one embodiment of the invention the main chamber is formed by a main housing, and the drive shaft is rotatable in a bearing in the main housing.

In another embodiment of the invention the main housing comprises a cylindrical side wall defining a central axis coinciding with the main rotational axis, and the inlet to the main chamber is formed in the side wall.

In a further embodiment of the invention the main chamber is mounted on a main support means for accommodating a container beneath the outlet from the main chamber for collecting glass discharged therethrough. Preferably, the main support means defines a hollow interior region for accommodating the container therein. Advantageously, the outlet from the main chamber is substantially centrally located relative to the hollow interior region defined by the main support means.

Ideally, the hollow interior region defined by the main support means is adapted for accommodating a wheelie bin beneath the outlet from the main chamber.

In one embodiment of the invention an extracting means is provided for extracting fine glass particles and dust from the main chamber. Preferably, a filter is provided in the extracting means for filtering out and collecting the fine glass particles and dust extracted from the main chamber.

The invention also provides a method for breaking glass bottles, the method comprising providing apparatus having a main chamber and a rotor rotatably mounted in the main chamber about a main rotational axis, and at least one bottle engaging member extending from the rotor for engaging and breaking a bottle in the main chamber as the rotor rotates, providing a drive means for rotating the rotor, and providing an inlet to the main chamber for accommodating bottles into the main chamber and an outlet from the main chamber for accommodating broken glass therefrom, and providing an inlet chute for delivering bottles to the main chamber through the inlet thereto, providing the inlet chute to extend from an upstream end to a downstream end adjacent the inlet to the main chamber, wherein a downstream portion of the inlet chute adjacent the downstream end thereof is provided to extend from the inlet to the main chamber in a general direction substantially radially relative to the main rotational axis, and to terminate in an upstream portion remote from the main chamber, the upstream portion is provided to extend from the downstream portion in a general direction opposite to the tangential direction of motion of each bottle engaging member adjacent the inlet to the main chamber, and to incline downwardly to the downstream portion, and the method further comprises rotating the rotor in the main chamber, and delivering glass bottles through the inlet chute to the main chamber so that as the rotor is rotating in the main chamber, the bottles are engaged therein by the at least one bottle engaging member for breaking thereof, and broken glass therefrom is delivered through the outlet from the main chamber.

The advantages of the invention are many. The glass bottle breaking apparatus according to the invention is a particularly efficient apparatus, and it is also relatively simple to operate and to maintain, and can be safely used. The apparatus breaks the bottles into relatively small pieces, thus significantly reducing the volume required for storage thereof. By providing the rotor rotatable in the main chamber having at least one bottle engaging member extending radially from the rotor, bottles delivered into the main chamber are efficiently shattered into relatively small pieces. Additionally, by providing the rotor rotatable in the mounting chamber and locating the mounting chamber above the support means, an efficient and compact apparatus is provided and requires minimum space.

By virtue of the arrangement of the delivery chute relative to the inlet to the main chamber within which the glass bottles are broken, and relative to the direction of motion of each bottle engaging member adjacent the inlet to the main chamber, there is virtually no danger of pieces of glass broken from a bottle being propelled by the bottle engaging members being propelled through the inlet chute, and in turn injuring a person feeding glass bottles into the apparatus. Additionally, by virtue of the construction of the rotor and the coupling of each bottle engaging member to the rotor, there is little or no danger of the apparatus becoming jammed and unserviceable, and there is little or no danger of the rotor or the drive means becoming overloaded. By virtue of the fact that the bottle engaging members are pivotally coupled to the rotor and are pivotal about respective pivot axes which are spaced apart from the main rotational axis, and parallel thereto, on encountering a load, the bottle engaging members can pivot relative to the rotor, thus avoiding an overload state.

By providing the inlet chute as an inlet duct which comprises upstream and downstream ducts, and by arranging the upstream duct at an angle relative to the downstream duct, and by arranging the upstream duct to extend from the downstream duct in a general direction opposite to the tangential direction of motion of each bottle engaging member adjacent the inlet to the main chamber, any danger of pieces of glass broken from glass bottles being propelled through the open mouth of the upstream duct is virtually entirely eliminated. Arranging the upstream duct at an angle of approximately 90° to the downstream duct further acts to avoid glass pieces being propelled through the open mouth defined by the upstream duct.

By virtue of the fact that the main chamber is mounted on a support means which defines a hollow interior region for accommodating a wheelie bin or other such container, glass broken from the bottles is delivered directly into the container for subsequent collection.

The provision of each bottle engaging member of steel, and preferably of hardened steel, ensures that the glass bottles are broken into relatively small pieces, and it has been found that the volume required to store the broken bottles after being broken by the apparatus is approximately one-fifth to one-eighth of the volume required to store the glass bottles in their unbroken state.

Additionally, by operating the rotor at a speed in the range of 700 RPM to 1,400 RPM further enhances the shattering effect of the bottle engaging members on the glass for further reducing the size of the pieces of glass broken from the glass bottles, and also ensures that the bottle engaging members extend radially outwardly of the rotor under the action of centrifugal force.

The invention will be more clearly understood from the following description of a preferred embodiment thereof, which is given by way of example only, with reference to the accompanying drawings, in which:

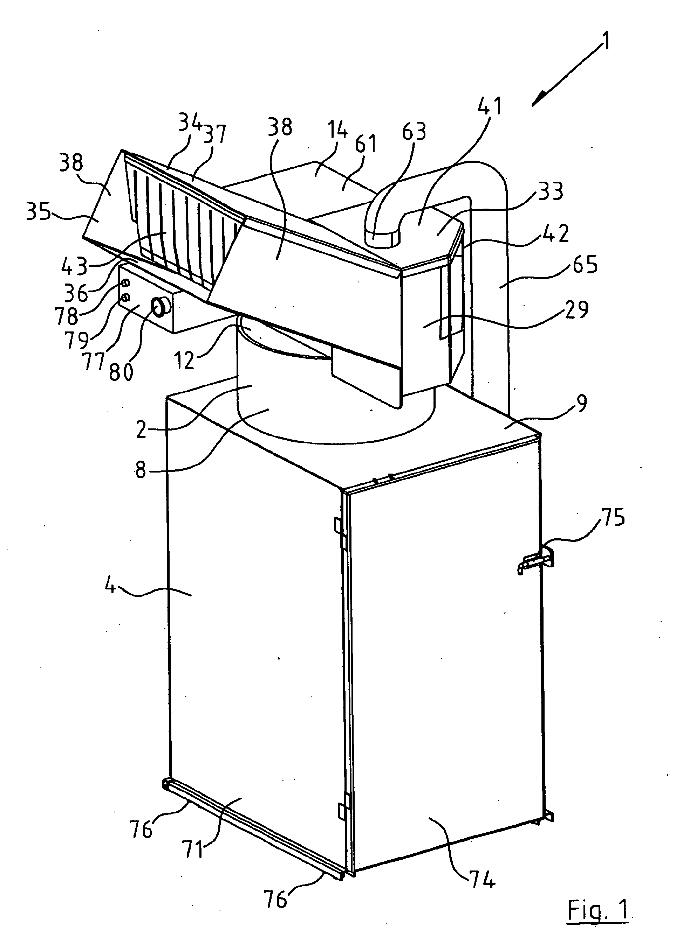

Fig. 1 is a perspective view of glass bottle breaking apparatus according to the invention,

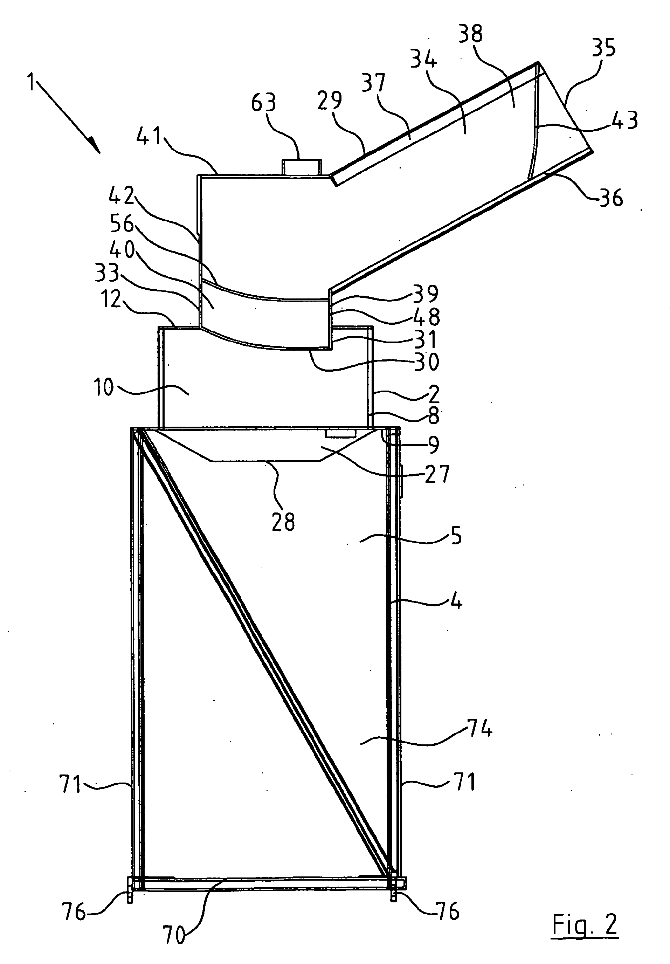

Fig. 2 is a transverse cross-sectional end elevational view of the apparatus of Fig. 1,

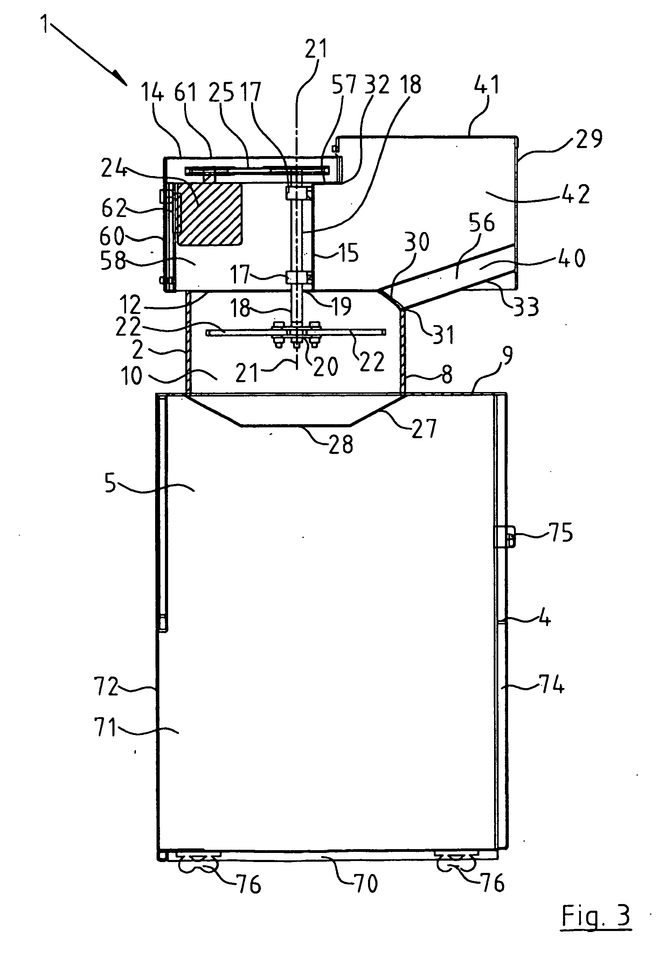

Fig. 3 is a transverse cross-sectional side elevational view of the apparatus of Fig. 1,

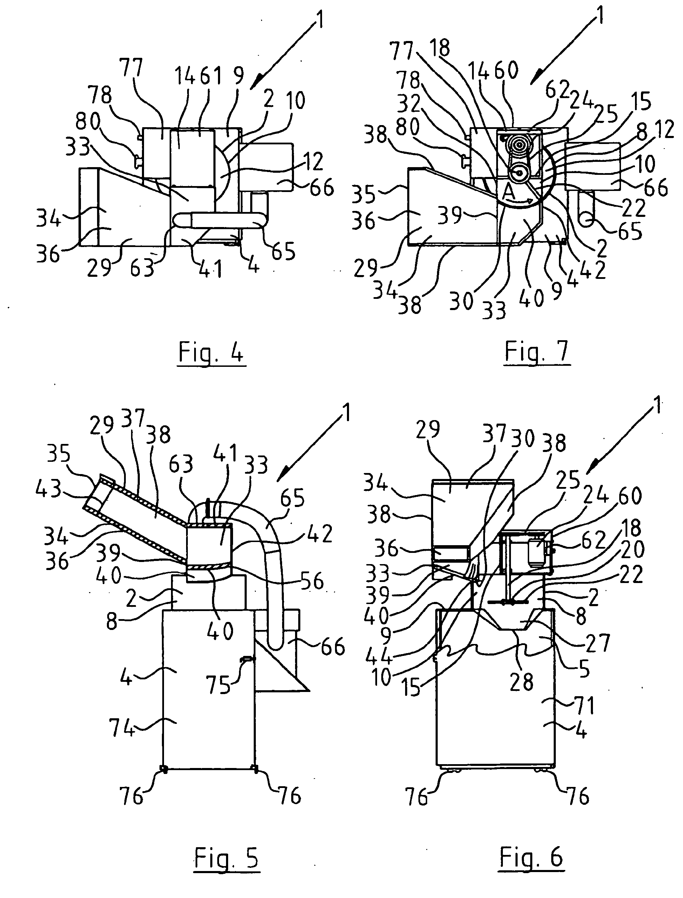

Fig. 4 is a top plan view of the apparatus of Fig. 1,
Fig. 5 is a partly sectional front end elevational view of the apparatus of Fig. 1,
Fig. 6 is a partly sectional side elevational view of the apparatus of Fig. 1,
Fig. 7 is a partly sectional top plan view of the apparatus of Fig. 1,

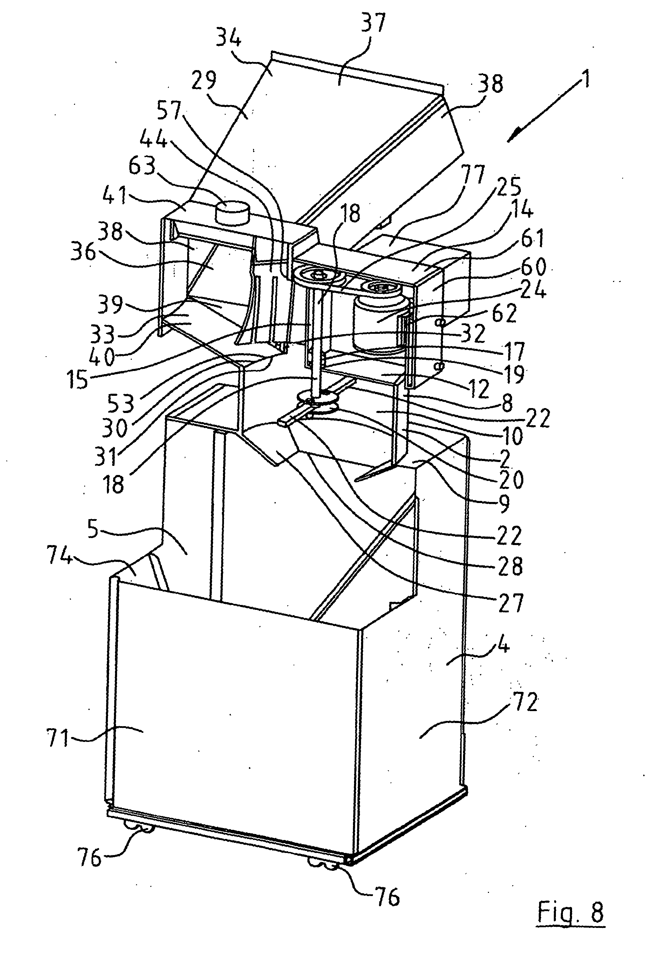

Fig. 8 is a partly cutaway perspective view of the apparatus of Fig. 1,

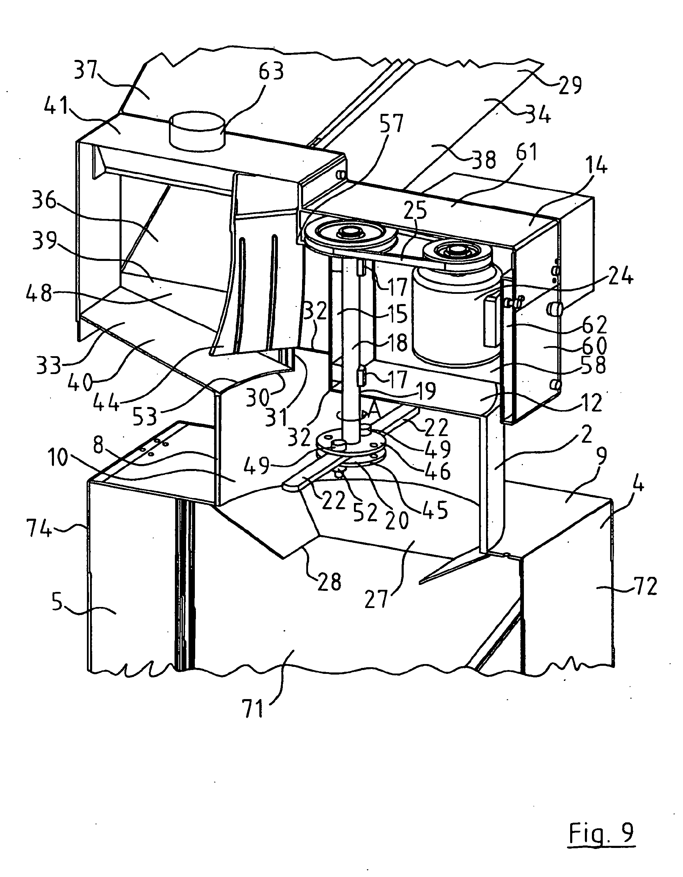

Fig. 9 is an enlarged partly cutaway perspective view of a portion of the apparatus of Fig. 1,
Fig. 10 is a transverse cross-sectional top plan view of the apparatus of Fig. 1, and
Fig. 11 is an exploded perspective view of a detail of the apparatus of Fig. 1.

Referring to the drawings, there is illustrated glass bottle breaking apparatus according to the invention, indicated generally by the reference numeral 1. The apparatus 1 is particularly suitable for breaking beverage bottles, such as, for example, beer bottles, wine bottles and the like, although, needless to say, the apparatus is suitable for breaking any type of glass containers, for example, glass jars and the like. The apparatus 1 comprises a main housing 2 within which the glass bottles are broken, as will be described below. The main housing 2 is supported on a main support means, in this embodiment of the invention a cabinet 4. The cabinet 4 defines a hollow interior region 5 for accommodating a wheelie bin (not shown) in which broken glass from the bottles is collected as will be described below.

The main housing 2 is formed by a cylindrical side wall 8 of steel plate material extending upwardly from a top plate 9 also of steel plate material of the cabinet 4. The cylindrical side wall 8 defines a main chamber 10 within which the glass bottles are broken. A top wall 12 of steel plate material welded to the side wall 8 at the top thereof closes a substantial portion of the top of the main chamber 10.

A sub-housing 14 mounted on the main housing 2 comprises an end wall 15 which carries a pair of bearings 17 which rotatably carry a drive shaft 18 which extends into the main chamber 10 through an opening 19 in the top wall 12. A rotor 20 rigidly secured to the drive shaft 18 is rotated in the main chamber 10 by the drive shaft 18 and defines a main rotational axis 21 about which the rotor 20 is rotatable. A pair of bottle engaging members 22 extending radially outwardly from the rotor 20 on respective opposite sides thereof engage and break bottles in the main chamber 10 as the rotor 20 rotates with the bottle engaging members 22. The rotor 20 and the bottle engaging members will be described in more detail below. An electrically powered drive motor 24 mounted in the sub-housing 14 as will be described below drives the drive shaft 18 through a belt drive transmission 25 for rotating the rotor 20 in the direction of the arrow A.

An outlet from the main chamber 10 is formed by an outlet chute 27 extending downwardly from the main chamber 10 and terminating in a discharge outlet 28 delivers broken glass from the bottles into the wheelie bin (not shown) in the cabinet 4.

An inlet chute provided by an inlet duct 29 accommodates bottles to be broken into the main chamber 10 through an inlet 30 which is partly formed by an inlet opening 31 in the side wall 8 and an inlet opening 32 in the top wall 12 of the main housing 2.

The inlet duct 29 comprises a downstream duct 33 and an upstream duct 34. The downstream duct 33 extends from the inlet 30 in a direction generally radially relative to the main rotational axis 21 of the rotor 20, and inclines upwardly towards the upstream duct 34. The upstream duct 34 inclines upwardly from the downstream duct 33 and terminates in a bottle accommodating open mouth 35 for accommodating bottles 35 into the inlet duct 29.

In this embodiment of the invention the upstream duct 34 of the inlet duct 29 extends at an angle of approximately 90° from the downstream duct 33 in a general direction which is opposite to the tangential direction of motion of the bottle engaging members 22 as they pass by the inlet 30. This ensures that pieces of glass broken from bottles by the bottle engaging members 22 in the main chamber 10 are not propelled by the bottle engaging members 22 through the inlet duct 29 and in turn through the open mouth 35. The downstream duct 33 is offset downwardly of the upstream duct 34, and is joined to the upstream duct 34 by a step portion 39. The drop at the step portion 39 as the bottles are transitioning from the upstream duct 34 to the downstream duct 33 facilitates in orienting the bottles for delivery into the main chamber 10 through the inlet 30 in order to obtain maximum shattering of the bottles when engaged by the bottle engaging members 22. As the bottles cross the step portion 39 and drop onto the downstream duct 33, the bottles are orientated and aligned with the downstream duct with the longitudinal axis of the bottles extending in an upstream/downstream direction relative to the secondary duct 33. Additionally, the inlet 30 is located in the side wall 8 above the bottle engaging members 22, so that the bottles drop into the main chamber 10 with the sides of the bottles presented to the bottle engaging members 22, rather than the ends thereof, thereby maximising the shattering effect of the bottle engaging members 22 on the bottles. The step portion 39 also further facilitates in avoiding pieces of glass broken from bottles being propelled by the bottle engaging members 22 through the inlet duct 29 to the bottle accommodating open mouth 35.

The upstream duct 34 of the inlet duct 29 comprises a base wall 36, a top wall 37 and a pair of spaced apart side walls 38 all of steel plate material which extend from the downstream duct 33 and terminate in the bottle accommodating open mouth 35. The side walls 38 converge in a downstream direction from the bottle accommodating open mouth 35 to the downstream duct 33. The downstream duct 33 of the inlet duct 29 comprises a base wall 40, a top wall 41 and a pair of side walls 42 of steel plate material. A riser 48 forming the step portion 39 joins the base wall 36 of the upstream duct 34 to the base wall 40 of the downstream duct 33. A portion 56 of the base wall 40 of the secondary duct 33 extending the length of the secondary duct 33 adjacent the side wall 42 remote from the riser 48 is arcuate in transverse cross-section. The arcuate portion 56 further assists in orienting the bottles in the secondary duct 33 with the longitudinal axes of the bottles aligned in the upstream/downstream direction of the secondary chute 33.

Additionally, a lower edge 53 of the inlet 30 formed by the inlet opening 31 in the side wall 8 of the main housing 2 is located at a level above a plane within which the bottle engaging members 22 rotate within the main chamber 10, thereby further ensuring that the sides of the bottles are presented to the bottle engaging members 22 as the bottles drop into the main chamber 10, and also minimising the danger of pieces of glass being propelled by the bottle engaging members 22 through the inlet duct 29.

An upstream flexible curtain 43 of plastics material depends downwardly into the upstream duct 34 for further facilitating in the prevention of pieces of glass being propelled by the bottle engaging members 22 through the bottle accommodating open mouth 35. A downstream flexible curtain 44 also of plastics material depends downwardly into the downstream duct 33 adjacent the inlet 30 to the main chamber 10 minimises any danger of pieces of glass broken from the bottles by the bottle engaging members 22 entering the downstream duct 33.

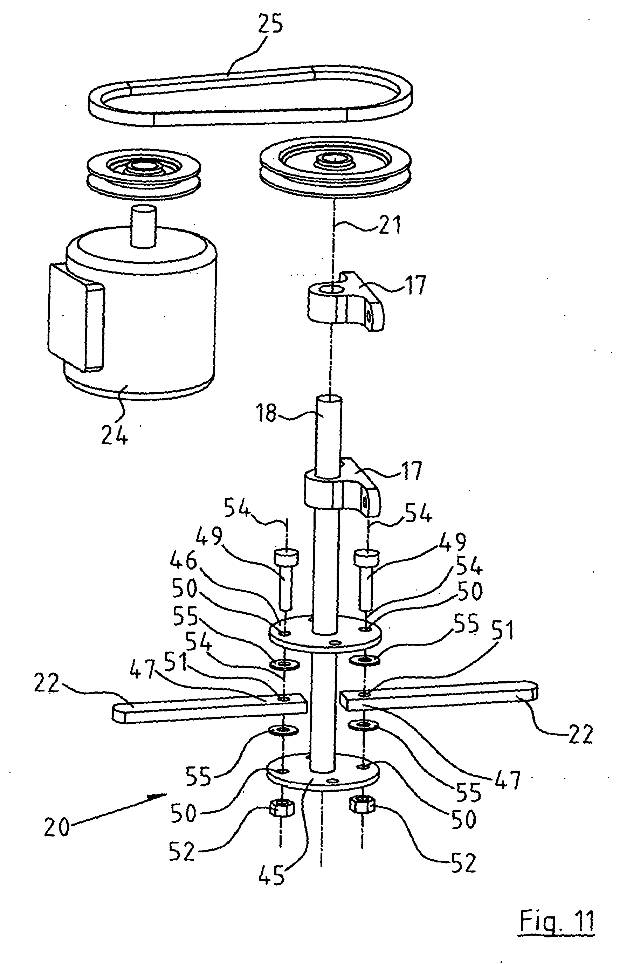

Returning now to the rotor 20 and referring in particular to Fig. 11, the bottle engaging members 22 are of hardened steel. The rotor 20 comprises a pair of clamping plates 45 and 46 of steel plate material between which proximal ends 47 of the bottle engaging members 22 are resiliently clamped. The clamping plate 45 is welded to the drive shaft 18. A pair of securing means comprising securing pins, in this embodiment of the invention provided by partly threaded bolts 49 extend through bores 50 in the clamping plates 45 and 46 and a bore 51 in the proximal end 47 of the corresponding bottle engaging members 22. Nuts 52 on the bolts 49 secure the bolts in the clamping plates 45 and 46. The bolts 49 define respective pivot axes 54 which are spaced apart from and extend parallel to the main rotational axis 21 and about which the bottle engaging members 22 are resiliently pivotal. Washers 55 on the bolts 49 and located between the proximal ends 47 of the bottle engaging members 22 and the respective clamping plates 45 and 46 are of a resilient plastics material and permit the clamping pressure of the clamping plates 45 and 46 acting on the proximal ends 47 of the bottle engaging members 22 to be varied by varying the tightness of the nuts 52 on the bolts 49. Accordingly, by selecting the degree to which the nuts 52 are tightened on the bolts 49, the clamping pressure exerted by the clamping plates 45 and 46 on the bottle engaging members 22 can be varied for permitting the bottle engaging members 22 to pivot about the pivot axes 54 in order to yield in the event of the pressure exerted on the bottle engaging members 22 exceeding a predetermined pressure level. The predetermined pressure level is determined by the clamping pressure with which the bottle engaging members 22 are clamped between the clamping plates 45 and 46.

Returning now to the sub-housing 14, the end wall 15 of the sub-housing 14 is of steel plate material and forms a part of the downstream duct 33 and is appropriately shaped at 57. Spaced apart side walls 58 of steel plate material extending from the side walls 42 of the downstream duct 33 form side walls of the sub-housing 14. An end wall 60 extending upwardly from the top wall 12 of the main housing 2 and between the side walls 58 terminates in a top wall 61 which closes the sub-housing 14. A carrier plate 62 adjustably mounted on the end wall 60 carries the drive motor 24 and is adjustable towards and away from the end wall 60 for adjusting tension in the belt drive transmission 25.

The drive motor 24 operates at a speed of 1,400 RPM, and the belt drive transmission 25 is a step-down drive which rotates the drive shaft 18 and in turn the rotor 20 at a speed of 750 RPM in the direction of the arrow A. Driving the rotor 20 at a speed of 750 RPM is sufficient for urging the bottle engaging members 22 radially outwardly by centrifugal force as the rotor 20 rotates. However, as mentioned above, the resilient clamping of the bottle engaging members 22 between the clamping plates 45 and 46 permits pivoting of the bottle engaging members 22 about the corresponding pivot axes 54 in the event of the bottle engaging members 22 being subjected to pressure above the predetermined pressure level. This, thus, avoids the danger of overloading and damage to the bottle engaging members 22, the rotor 20, the drive shaft 18 and the drive motor 24.

It has been found that driving the rotor at a speed of 750 RPM is sufficient for shattering the glass bottles into small glass particles, typically of between 12mm and 30mm, although it is envisaged that the rotor 20 may be driven at speeds in the range of 700 RPM to 1,400 RPM, and at such speeds adequate results would be obtained.

A vent outlet 63 from a top wall 41 of the downstream duct 33 is provided for facilitating extraction of fine glass particles and dust from the inlet duct 29 and in turn from the main chamber 10. A conduit 65 extending from the vent outlet 63 couples the vent outlet 63 to an extraction means, namely, a vacuum extraction unit 66 which draws the fine glass particles and dust through the conduit 65 from the inlet duct 29. Air entrained with fine glass particles and dust is passed through a filter (not shown) in the vacuum extraction unit 66 before being discharged to atmosphere. Fine glass particles and glass dust are retained in the filter (not shown), which periodically is replaced.

Returning now to the cabinet 4, the cabinet 4 comprises a base 70 and a pair of upstanding side walls 71 which extend upwardly from the base 70 to the top plate 9. An end wall 72 extending upwardly from the base plate 70 to the top plate 9 joins the side walls 71. A door 74 hingedly coupled to one of the side walls 71 and securable in a closed state by a bolt 75 to the other side wall 71 closes the hollow interior region 5. The base 70, side walls 71, end wall 72 and the door 74 are of steel plate material. Ground engaging castors 76 carried on the base 70 facilitate moving the apparatus 1 from place to place.

Control circuitry (not shown, but which will be well known to those skilled in the art) is provided for controlling the operation of the drive motor 24 and the vacuum unit 66, and is located in a control box 77. An on switch 78 and an off switch 79 are provided on the control box 77 for switching on and switching off the drive motor 24 and the vacuum unit 66. An emergency stop switch 80 is provided on the control box 77 for facilitating deactivation of the apparatus 1 in the event of an emergency arising. An interlocking switch (not shown) is provided in the cabinet 4 and co-operates with the door 74 for isolating power from the drive motor 24 and the vacuum unit 66 until the door 74 of the cabinet 4 is securely closed by the bolt 75.

The discharge outlet 28 from the main chamber 10 is of square cross-section and is centrally axially located relative to the main chamber 10 and the main rotational axis 21 of the rotor 20 for delivering glass from the main chamber 10 into the wheelie bin (not shown) in the hollow interior region 5 of the cabinet 4.

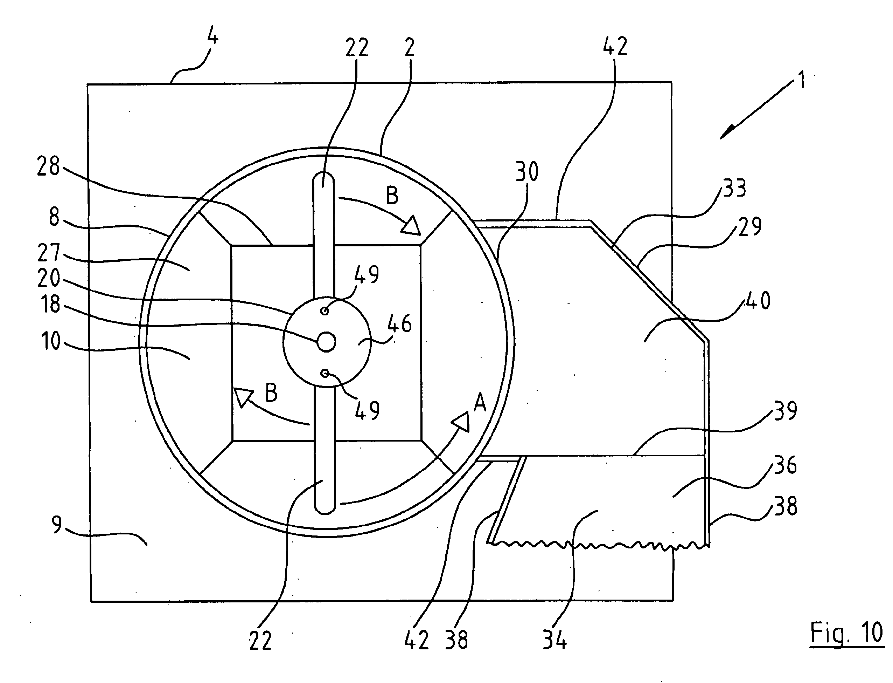

In use, with a wheelie bin located in the cabinet 4 and the door 74 secured in the closed state by the bolt 75, the apparatus 1 is ready for use. The on/off switch 78 is operated for activating the drive motor 24 and the vacuum unit 66, and bottles to be broken are delivered into the upstream duct 34 through the bottle accommodating open mouth 35. The bottles slide down the upstream duct 34 under gravity and drop down the step portion 39 onto the downstream duct 33 and in turn slide down the downstream duct 33 under gravity, and through the inlet 30 into the main chamber 29. On being struck by the rotating bottle engaging members 22 in the main chamber 10, the bottles are shattered into many pieces, which are then directed by the outlet chute 27 through the discharge outlet 28 into the wheelie bin (not shown) in the cabinet 4 for collection therein. In the event of the bottle engaging members 22 encountering a pressure greater than a predetermined pressure level which is determined by the degree of tightness imparted to the nuts 52 on the bolts 49 as a result of a foreign object, such as a stone or a brick being entered into the apparatus, the bottle engaging members 22 pivot about the corresponding pivot axes 54 in the direction of the arrow B, see Fig. 10, against the resilience of the washers 55, on engaging the foreign object, thereby preventing overloading and damage to the bottle engaging members 22, the rotor 20, the drive shaft 18 and the drive motor 24.

When the wheelie bin in the cabinet 4 is full, it is then replaced by an empty wheelie bin by opening the door 74 to permit access to the hollow interior region 5 of the cabinet 4.

While the rotor has been described as comprising two bottle engaging members, it will be readily apparent to those skilled in the art that only one bottle engaging member need be provided, and indeed, in certain cases, more than two bottle engaging members may be provided. In cases where more than two bottle engaging members are provided, for example, four bottle engaging members, it is envisaged that the bottle engaging members will be equi-spaced circumferentially around the rotor. Indeed, it is envisaged that sets of bottle engaging members may be provided, and in which case, each set of bottle engaging members would be secured to a corresponding rotor, and the rotors would be spaced apart axially along the shaft. It is envisaged that each set of bottle engaging members would comprise at least two bottle engaging members, and the bottle engaging members of each set would be staggered circumferentially around the main rotational axis relative to the bottle engaging members of the other set or sets. However, in certain cases it is envisaged that some or all of the sets of bottle engaging members may have only one bottle engaging member, and it is also envisaged that the sets of bottle engaging members may have different numbers of bottle engaging members.

Additionally, while the rotor has been described as being driven at a particular speed, the rotor may be driven at other suitable speeds.

While it is desirable that the securing means should resiliently mount the bottle engaging members to the rotor, this is not essential, since in general, it is envisaged that the speed with which the rotor is rotated will provide sufficient centrifugal force for urging the bottle engaging members radially outwardly from the rotor, and in which case, the rotors would be freely pivotally carried on the pivot pins which are provided by the partly threaded bolts which couple the bottle engaging members to the rotor.

While the rotor has been described as being of particular construction, and in particular, comprising a pair of spaced apart clamping plates, any other suitable construction of rotor may be used.

## Claims

1. Glass bottle breaking apparatus comprising a main chamber (10), a rotor (20) rotatably mounted in the main chamber (10) about a main rotational axis (21) and having at least one bottle engaging member (22) extending therefrom for engaging and breaking a bottle in the main chamber (10) as the rotor (20) rotates, a drive means (24) for rotating the rotor (20), an inlet (30) to the main chamber (10) for accommodating bottles into the main chamber (10), an outlet (27,28) from the main chamber (10) for accommodating broken glass therefrom, and an inlet chute (29) for delivering bottles to the main chamber (10) through the inlet (30) thereto, the inlet chute (29) extending from an upstream end to a downstream end adjacent the inlet (30) to the main chamber (10), **characterised in that** a downstream portion (33) of the inlet chute (29) adjacent the downstream end thereof extends from the inlet (30) to the main chamber (10) in a general direction substantially radially relative to the main rotational axis (21) and terminates in an upstream portion (34) of the inlet chute (29) remote from the main chamber (10), the upstream portion (34) extends from the downstream portion (33) in a general direction opposite to the tangential direction of motion of each bottle engaging member (22) adjacent the inlet (30) to the main chamber (10), and is inclined downwardly to the downstream portion (33).

2. Apparatus as claimed in Claim 1 **characterised in that** each bottle engaging member (22) extends in a general radial direction from the rotor (20).

3. Apparatus as claimed in Claim 1 or 2 **characterised in that** each bottle engaging member (22) is an elongated member of metal.

4. Apparatus as claimed in any preceding claim **characterised in that** each bottle engaging member (22) is secured to the rotor by a securing means (45,46,49,52), the securing means being adapted to yield on pressure on the bottle engaging member (22) exceeding a predetermined pressure for facilitating movement of the bottle engaging member (22) relative to the rotor (20) for avoiding overloading of the rotor (20) and/or the drive means (24).

5. Apparatus as claimed in any preceding claim **characterised in that** the downstream portion (33) of the inlet chute (29) is offset downwardly from the upstream portion (34) thereof to form a downward step (39) from the upstream portion (34) to the downstream portion (33).

6. Apparatus as claimed in any preceding claim **characterised in that** the inlet chute (29) comprises an inlet duct (29), the inlet duct comprising an upstream duct (34) forming the upstream portion (34) of the inlet chute, and a downstream duct (33) forming the downstream portion (33) of the inlet chute, and the upstream duct (34) terminates in an open mouth (35) remote from the downstream duct (33) for accommodating bottles into the inlet duct (29).

7. Apparatus as claimed in any preceding claim **characterised in that** the outlet (27,28) from the main chamber (10) extends axially downwardly therefrom.

8. Apparatus as claimed in any preceding claim **characterised in that** the rotor (20) is rotated by the drive means (24) at a speed in the range of 700 RPM to 1,400 RPM.

9. Apparatus as claimed in any preceding claim **characterised in that** the main chamber (10) is mounted on a main support means (4) for accommodating a container beneath the outlet (27,28) from the main chamber (10) for collecting glass discharged therethrough.

10. Apparatus as claimed in Claim 9 **characterised in that** the main support means (4) defines a hollow interior region (5) for accommodating the container therein.

11. Apparatus as claimed in Claim 10 **characterised in that** the hollow interior region (5) defined by the main support means (4) is adapted for accommodating a wheelie bin beneath the outlet (27,28) from the main chamber (10).

12. Apparatus as claimed in any preceding claim **characterised in that** an extracting means (63,65,66) is provided for extracting fine glass particles and dust from the main chamber (10).

13. A method for breaking glass bottles, the method comprising providing apparatus (1) having a main chamber (10) and a rotor (20) rotatably mounted in the main chamber (10) about a main rotational axis (21), and at least one bottle engaging member (22) extending from the rotor (20) for engaging and breaking a bottle in the main chamber (10) as the rotor (20) rotates, providing a drive means (24) for rotating the rotor (20), and providing an inlet (30) to the main chamber (10) for accommodating bottles into the main chamber (10) and an outlet (27,28) from the main chamber (10) for accommodating broken glass therefrom, and providing an inlet chute (29) for delivering bottles to the main chamber (10) through the inlet (30) thereto, providing the inlet chute (29) to extend from an upstream end to a downstream end adjacent the inlet (30) to the main chamber (10), **characterised in that** a downstream portion (33) of the inlet chute (29) adjacent the downstream end thereof is provided to extend from the inlet (30) to the main chamber (10) in a general direction substantially radially relative to the main rotational axis (21), and to terminate in an upstream portion (34) remote from the main chamber (10), the upstream portion (34) is provided to extend from the downstream portion (33) in a general direction opposite to the tangential direction of motion of each bottle engaging member (22) adjacent the inlet (30) to the main chamber (10), and to incline downwardly to the downstream portion (33), and the method further comprises rotating the rotor (20) in the main chamber (10), and delivering glass bottles through the inlet chute (29) to the main chamber (10) so that as the rotor (20) is rotating in the main chamber (10), the bottles are engaged therein by the at least one bottle engaging member (22) for breaking thereof, and broken glass therefrom is delivered through the outlet (27,28) from the main chamber (10).

## Patentansprüche

1. Vorrichtung zum Zerbrechen einer Glasflasche, die Folgendes umfasst: eine Hauptkammer (10), einen in der Hauptkammer (10) um eine Rotationsachse (21) drehbar angebrachten Rotor (20) mit mindestens einem sich von dort erstreckenden Flaschen greifenden Element (22) zum Greifen und Zerbrechen einer Flasche in der Hauptkammer (10), während sich der Rotor (20) dreht, ein Antriebsmittel (24) zum Drehen des Rotors (20), ein Zulauf (30) zur Hauptkammer (10) zur Aufnahme von Flaschen in die Hauptkammer (10), ein Auslauf (27,28) aus der Hauptkammer (10) zur Aufnahme von zerbrochenem Glas aus dieser Kammer und ein Zulaufschacht (29) zur Weiterleitung von Flaschen in die Hauptkammer (10) durch den Zulauf (30) zu dieser Kammer, wobei sich der Zulaufschacht (29) von einem vorgeschalteten Ende zu einem nachgeschalteten, an den Zulauf (30) zur Hauptkammer (10) angrenzenden Ende erstreckt, **dadurch gekennzeichnet, dass** sich ein an das nachgeschaltete Ende davon angrenzender nachgeschalteter Teil (33) des Zulaufschachts (29) vom Zulauf (30) zur Hauptkammer (10) erstreckt in einer Hauptrichtung, die im Wesentlichen radial zur Hauptrotationsachse (21) verläuft und in einem vorgeschalteten Teil (34) des Zulaufschachts (29) fern von der Hauptkammer (10) endet, wobei sich der vorgeschaltete Teil (34) vom nachgeschalteten Teil (33) in einer Hauptrichtung umgekehrt zur Tangentialrichtung der Bewegung aller Flaschengreifelemente (22), die an den Zulauf (30) zur Hauptkammer (10) angrenzen, erstreckt und sich nach unten zum nachgeschalteten Teil (33) hin neigt.

2. Vorrichtung gemäß Anspruch 1, **dadurch gekennzeichnet, dass** sich alle Flaschengreifelemente (22) in einer Hauptrichtung vom Rotor (20) weg erstrecken.

3. Vorrichtung gemäß Anspruch 1 oder 2, **dadurch gekennzeichnet, dass** jedes Flaschengreifelement (22) ein verlängertes Element aus Metall ist.

4. Vorrichtung gemäß allen vorangegangenen Ansprüchen, **dadurch gekennzeichnet, dass** jedes Flaschengreifelement (22) mit einem Sicherungsmittel (45,46,49,52) am Rotor gesichert ist, wobei das Sicherungsmittel so angepasst ist, dass es auf einen auf das Flaschengreifelement (22) ausgeübten Druck, der einen vordefinierten Druck übersteigt,

5. Vorrichtung gemäß allen vorangegangenen Ansprüchen, **dadurch gekennzeichnet, dass** der nachgeschaltete Teil (33) des Zulaufschachts (29) gegenüber dem vorgeschalteten Teil (34) nach unten versetzt ist, um einen Abwärtsschritt (39) vom dem vorgeschalteten Teil (34) zum nachgeschalteten Teil (33) zu bilden.

6. Vorrichtung gemäß allen vorangegangenen Ansprüchen, **dadurch gekennzeichnet, dass** der Zulaufschacht (29) einen Zulaufdurchgang (29) bildet, wobei der Zulaufdurchgang einen vorgeschalteten Durchgang (34) bildet, der den vorgeschalteten Teil (34) des Zulaufschachts bildet, und einen nachgeschalteten Durchgang (33), der den nachgeschalteten Teil (33) des Zulaufschachts bildet, und wobei der vorgeschaltete Durchgang (34) in einer offenen Mündung (35) fern von nachgeschalteten Durchgang (33) zur Aufnahme von Flaschen im Zulaufdurchgang (29) endet.

7. Vorrichtung gemäß allen vorangegangenen Ansprüchen, **dadurch gekennzeichnet, dass** sich der Auslauf (27,28) von der Hauptkammer (10) von dort aus axial nach unten erstreckt.

8. Vorrichtung gemäß allen vorangegangenen Ansprüchen, **dadurch gekennzeichnet, dass** der Rotor (20) durch ein Antriebsmittel (24) mit einer Geschwindigkeit zwischen 700 U/Min und 1.400 U/Min gedreht wird.

9. Vorrichtung gemäß allen vorangegangenen Ansprüchen, **dadurch gekennzeichnet, dass** die Hauptkammer (10) an einem Hauptstützmittel (4) montiert ist zur Aufnahme eines Behälters unter dem Auslauf (27,28) von der Hauptkammer (10) zum Aufnehmen des dort ausgestoßenen Glases.

10. Vorrichtung gemäß Anspruch 9, **dadurch gekennzeichnet, dass** das Hauptstützmittel (4) einen inneren Hohlbereich (5) aufweist zur Aufnahme des darin enthaltenen Behälters.

11. Vorrichtung gemäß Anspruch 10, **dadurch gekennzeichnet, dass** der durch das Hauptstützmittel (4) gebildete hohle Innenbereich (5) angepasst ist zur Aufnahme einer

12. Vorrichtung gemäß allen vorangegangenen Ansprüchen, **dadurch gekennzeichnet, dass** ein Extraktionsmittel (63,65,66) bereitgestellt wird zum Extrahieren von feinen Glaspartikeln und Staub von der Hauptkammer (10).

13. Ein Verfahren zum Zerbrechen von Glasflaschen, wobei das Verfahren Folgendes umfasst: die Bereitstellung einer Vorrichtung (1) mit einer Hauptkammer (10) und einem Rotor (20), der in der Hauptkammer (10) um eine Rotationsachse (21) drehbar montiert ist, und mindestens eines Flaschengreifelements (22), das sich vom Rotor (20) erstreckt, zum Greifen und Zerbrechen einer Flasche in der Hauptkammer (10), während sich der Rotor (20) dreht, die Bereitstellung eines Antriebsmittels (24) zum Drehen des Rotors (20) und die Bereitstellung eines Zulaufs (30) zur Hauptkammer (10) zur Aufnahme von Flaschen in der Hauptkammer (10) und eines Auslaufs (27,28) von der Hauptkammer (10) zur Aufnahme von zerbrochenem Glas daraus und die Bereitstellung eines Zulaufschachts (29) zur Weiterleitung von Flaschen in die Hauptkammer (10) durch den Zulauf (30) dazu, die Bereitstellung des Zulaufschachts (29), der sich von einem vorgeschalteten Ende zu einem nachgeschalteten, an den Zulauf (30) zur Hauptkammer (10) angrenzenden Ende erstreckt, **dadurch gekennzeichnet, dass** ein nachgeschalteter Teil (33) des an das nachgeschaltete Ende davon angrenzenden Zulaufschachts (29) bereitgestellt wird, das sich vom Zulauf (30) zur Hauptkammer (10) erstreckt in einer Hauptrichtung, die im Wesentlichen radial zur Hauptrotationsachse (21) verläuft und in einem vorgeschalteten Teil (34) fern von der Hauptkammer (10) endet, wobei der vorgeschaltete Teil (34) so bereitgestellt wird, dass er sich von dem nachgeschalteten Teil (33) in einer Hauptrichtung erstreckt, die umgekehrt tangential zur Bewegung aller Flaschengreifelemente (22), die an den Zulauf (30) zur Hauptkammer (10) angrenzen, verläuft, und der sich nach unten zum nachgeschalteten Teil (33) hin neigt, und wobei das Verfahren des Weiteren das Drehen des Rotors (20) in der Hauptkammer (10) umfasst und die Weiterleitung von Glasflaschen durch den Zulaufschacht (29) zur Hauptkammer (10), sodass beim Drehen des Rotors (20) in der Hauptkammer (10) die Flaschen darin von mindestens einem Flaschengreifelement (22) zum Brechen der Flasche gegriffen werden und das zerbrochene Glas daraus durch den Auslauf (27,28) von der Hauptkammer(10) weitergeleitet wird.

## Revendications

1. Appareil de casse de bouteille en verre comprenant une chambre principale (10), un rotor (20) monté en rotation dans la chambre principale (10) autour d'un axe rotatif principal (21) et ayant au moins un élément d'engagement de bouteille (22) s'étendant depuis celui-ci pour engager et casser une bouteille dans la chambre principale (10) tandis que le rotor (20) tourne, un moyen d'entraînement (24) pour faire tourner le rotor (20), une entrée (30) vers la chambre principale (10) pour recueillir les bouteilles dans la chambre principale (10), une sortie (27,28) depuis la chambre principale (10) pour recueillir le verre cassé depuis celle-ci, et une goulotte d'entrée (29) pour amener les bouteilles dans la chambre principale (10) via l'entrée (30) vers celle-ci, la goulotte d'entrée (29) s'étendant depuis une extrémité en amont vers une extrémité en aval adjacente à l'entrée (30) vers la chambre principale (10), **caractérisé en ce qu'**une partie en aval (33) de la goulotte d'entrée (29) adjacente à l'extrémité en aval de celle-ci s'étend depuis l'entrée (30) vers la chambre principale (10) dans une direction générale de manière essentiellement radiale par rapport à l'axe rotatif principal (21) et se termine dans une partie en amont (34) de la goulotte d'entrée (29) à distance de la chambre principale (10), la partie en amont (34) s'étend depuis la partie en aval (33) dans une direction générale opposée à la direction tangentielle de mouvement de chaque élément d'engagement de bouteille (22) adjacent à l'entrée (30) vers la chambre principale (10) et est inclinée vers le bas vers la partie en aval (33).

2. Appareil selon la revendication 1 **caractérisé en ce que** chaque élément d'engagement de bouteille (22) s'étend dans une direction radiale générale depuis le rotor (20).

3. Appareil selon la revendication 1 ou 2 **caractérisé en ce que** chaque élément d'engagement de bouteille (22) est un élément allongé en métal.

4. Appareil selon l'une quelconque des revendications précédentes **caractérisé en ce que** chaque élément d'engagement de bouteille (22) est fixé au rotor à l'aide d'un moyen de fixation (45,46,49,52), le moyen de fixation étant adapté pour céder à une pression sur l'élément d'engagement de bouteille (22) dépassant une pression prédéterminée afin de faciliter le mouvement de l'élément d'engagement de bouteille (22) par rapport au rotor (20) pour éviter le chevauchement du rotor (20) et/ou du moyen d'entraînement (24).

5. Appareil selon l'une quelconque des revendications précédentes **caractérisé en ce que** la partie en aval (33) de la goulotte d'entrée (29) est déportée vers le bas depuis la partie en amont (34) de celle-ci pour former un passage vers le bas (39) depuis la partie en amont (34) vers la partie en aval (33).

6. Appareil selon l'une quelconque des revendications précédentes **caractérisé en ce que** la goulotte d'entrée (29) comprend un canal d'entrée (29), le canal d'entrée comprenant un canal en amont (34) formant la partie en amont (34) de la goulotte d'entrée et un canal en aval (33) formant la partie en aval (33) de la goulotte d'entrée, et le canal en amont (34) se termine dans une bouche ouverte (35) à distance du canal en aval (33) afin de recueillir les bouteilles dans le canal d'entrée (29).

7. Appareil selon l'une quelconque des revendications précédentes **caractérisé en ce que** la sortie (27,28) depuis la chambre principale (10) s'étend axialement vers le bas depuis celle-ci.

8. Appareil selon l'une quelconque des revendications précédentes **caractérisé en ce que** le rotor (20) est tourné à l'aide du moyen d'entraînement (24) à une vitesse située entre 700 tr/min. et 1400 tr/min.

9. Appareil selon l'une quelconque des revendications précédentes **caractérisé en ce que** la chambre principale (10) est montée sur un moyen de support principal (4) destiné à loger un conteneur sous la sortie (27,28) depuis la chambre principale (10) afin de collecter le verre déchargé via celle-ci.

10. Appareil selon la revendication 9 **caractérisé en ce que** le moyen de support principal (4) définit une zone intérieure creuse (5) afin de loger le conteneur à l'intérieur de celle-ci.

11. Appareil selon la revendication 10 **caractérisé en ce que** la zone intérieure creuse (5) définie par le moyen de support principal (4) est adaptée pour loger une poubelle à roulettes sous la sortie (27, 28) depuis la chambre principale (10).

12. Appareil selon l'une quelconque des revendications précédentes **caractérisé en ce qu'**un moyen d'extraction (63,65,66) est prévu pour extraire les fines particules de verre et la poussière depuis la chambre principale (10).

13. Procédé permettant de casser des bouteilles en verre, le procédé comprenant la fourniture d'un appareil (1) ayant une chambre principale (10) et un rotor (20) monté en rotation dans la chambre principale (10) autour d'un axe rotatif principal (21) et au moins un élément d'engagement de bouteille (22) s'étendant depuis le rotor (20) pour engager et casser une bouteille dans la chambre principale (10) tandis que le rotor (20) tourne, la fourniture d'un moyen d'entraînement (24) pour faire tourner le rotor (20), et la fourniture d'une entrée (30) vers la chambre principale (10) pour recueillir les bouteilles dans la chambre principale (10) et une sortie (27,28) depuis la chambre principale (10) pour recueillir le verre cassé depuis celle-ci, et la fourniture d'une goulotte d'entrée (29) pour amener les bouteilles dans la chambre principale (10) via l'entrée (30) vers celle-ci, la goulotte d'entrée (29) s'étendant depuis une extrémité en amont vers une extrémité en aval adjacente à l'entrée (30) vers la chambre principale (10), **caractérisé en ce qu'**une partie en aval (33) de la goulotte d'entrée (29) adjacente à l'extrémité en aval de celle-ci est prévue pour s'étendre depuis l'entrée (30) vers la chambre principale (10) dans une direction générale de manière essentiellement radiale par rapport à l'axe rotatif principal (21) et se terminer dans une partie en amont (34) à distance de la chambre principale (10), la partie en amont (34) est prévue pour s'étendre depuis la partie en aval (33) dans une direction générale opposée à la direction tangentielle de mouvement de chaque élément d'engagement de bouteille (22) adjacent à l'entrée (30) vers la chambre principale (10) et être inclinée vers le bas vers la partie en aval (33), et le procédé comprend en outre la rotation du rotor (20) dans la chambre principale (10) et l'approvisionnement de bouteilles de verre via la goulotte d'entrée (29) vers la chambre principale (10) de telle sorte que le rotor (20) tourne dans la chambre principale (10), que les bouteilles soient engagées à l'intérieur de celle-ci par le au moins un élément d'engagement de bouteille (22) pour être cassées et que le verre cassé soit ensuite amené via la sortie (27,28) depuis la chambre principale (10).
